# EUROPEAN PATENT SPECIFICATION

(11) **EP 2 450 864 B1**
(45) Date of publication and mention of the grant of the patent: **31.10.2018**
(21) Application number: 09846805.1
(22) Date of filing: 30.06.2009
(51) Int. Cl.: G06F 19/00, G05B 17/02, G08G 1/01, G06Q 10/04

(54) **SIMULATION DEVICE, METHOD, AND PROGRAM**
STEUERVORRICHTUNG, -VERFAHREN UND -PROGRAMM
DISPOSITIF, PROCÉDÉ ET PROGRAMME DE SIMULATION

(43) Date of publication of application: 09.05.2012
(73) Proprietor: Fujitsu Limited, Kawasaki-shi, Kanagawa 211-8588 (JP)
(72) Inventor: KITAGAWA, Eiji, Kawasaki-shi Kanagawa 211-8588 (JP); IKEDA, Takuro, Kawasaki-shi Kanagawa 211-8588 (JP); YAMADA, Hiroshi, Kobe-shi Hyogo 652-8510 (JP)
(74) Representative: Haseltine Lake LLP
(86) International application number: PCT/JP2009/061970
(87) International publication number: WO 2011/001512

(56) References cited:
- EP-A1- 1 569 186
- JP-A- 10 334 389
- JP-A- 11 259 570
- JP-A- 2003 044 975
- JP-A- 2009 093 425
- US-A1- 2002 062 207
- US-A1- 2002 198 694
- US-B1- 6 172 617
- CIVILIS A ET AL: "Techniques for Efficient Road-Network-Based Tracking of Moving Objects", IEEE TRANSACTIONS ON KNOWLEDGE AND DATA ENGINEERING, IEEE SERVICE CENTER, LOS ALAMITOS, CA, US, vol. 17, no. 5, 1 May 2005 (2005-05-01), pages 698-712, XP011128757, ISSN: 1041-4347, DOI: 10.1109/TKDE.2005.80

## Description

### Technical Field

The embodiments discussed herein are related to the technique of simulating a movable body in the virtual space.

### Background Art

Generally, traffic flow simulators are classified into macrosimulators and microsimulators. The macrosimulators evaluate a wide-ranging traffic situation by handling the traffic flow in analogy to a fluid, and the microsimulators simulate the motion of individual vehicles to reproduce the traffic flow. As the computational complexity is small in macrosimulators, the efficacy of traffic policy across a wide area can be indicated. As an example, the process of assessing the congestion status according to the number and the traveling speed of the vehicles which exist in each of a plurality of images captured by a plurality of capturing devices has been proposed (for example, see Patent Document 1).

### PRIOR ART DOCUMENTS

### PATENT DOCUMENTS:

[Patent Document 1] Japanese Laid-open Patent Publication No. 2002-288786

US 2002/0198694 discloses systems and methods for geographically based analyses of traffic carried over a wide scale traffic network, and for traffic data management and simulation.

### Disclosure of Invention

### Problems to be solved by the Invention

On one hand, the macrosimulators cannot recreate the motion of individual vehicles, and thus it is difficult to evaluate a traffic policy where various driving motions are taken into consideration. On the other hand, the microsimulators can simulate the motion of individual vehicles, but it is difficult to evaluate the traffic policy across a wide area due to the large computational complexity. This problem exists not only in microsimulators which reproduce the traffic flow but also in other simulations in which the motion of individual movable bodies is simulated.

The present invention has been made in view of the above-mentioned problems, and it is an object of the present invention to provide a simulation device, simulation method, and simulation program in which the total amount of data referred to in the status updating process can be cut down.

### Means for solving the Problems

A simulation device is defined in claim 1. Preferred features are defined in the dependent claims. A simulation program and a simulation method are provided also.

### Effects of the Invention

According to the disclosure of the Description of the present application, a simulation device, method, and program in which the total amount of data referred to in the status updating process can be cut down are provided.

### Brief Description of the Drawings

FIG. 1 is a functional block diagram illustrating an example of the configuration of a simulation device according to the first embodiment.
FIG. 2 is a diagram illustrating the contents of road links.
FIG. 3 is a diagram illustrating the contents of vehicle status data.
FIG. 4 is a diagram illustrating examples of the data which defines fields.
FIG. 5 is a diagram illustrating an example of the update control information 5.
FIG. 6 is a diagram illustrating an example of the reference range information 4a-4c.
FIG. 7 is a diagram schematically illustrating the division and hierarchies of the status updating process as an example according to the first embodiment.
FIG. 8 is a diagram schematically illustrating the division and hierarchies of the status updating process as an example according to the first embodiment.
FIG. 9 is an example of a diagram schematically illustrating the status updating process and simulation data range in cases where the status updating process is not divided.
FIG. 10 is a diagram illustrating an example of the amount of the simulation data (upper level) in cases where the status updating process is not divided, and the amount of the simulation data (lower level) in cases where the status updating process is divided such that each of the divided status updating processes has a different cycle.
FIG. 11 is a diagram illustrating an example of the amount of the simulation data (lower level) in cases where the status updating process is divided into hierarchies and localization is further performed so as to decrease the range of the simulation data in the status updating process of a short updating time interval, and the amount of the simulation data (upper level) in cases where the status updating process is not divided.
FIG. 12 is a flowchart illustrating an example of the operation of a simulation device 1.
FIG. 13 is a diagram illustrating an example of the contents of a path link.
FIG. 14 is a diagram illustrating an example of the contents of person status data.
FIG. 15 is a diagram illustrating an example of the contents of product data.
FIG. 16 is a diagram illustrating an example of the update control information according to the second embodiment.
FIG. 17 is a diagram illustrating an example of the reference range information according to the second embodiment.
FIG. 18 is a diagram schematically illustrating an example of the status updating process which is divided into hierarchies according to the second embodiment.
FIG. 19 is a diagram schematically illustrating an example of the status updating process which is divided into hierarchies according to the second embodiment.
FIG. 20 is a flowchart illustrating an example of the operation of a simulation device according to the second embodiment.
FIG. 21 is a functional block diagram illustrating an example of the configuration of a simulation device according to the third embodiment.

### Best Mode of Carrying Out the Invention

Some embodiments of the present invention will be described with respect to the drawings.

### [First embodiment]

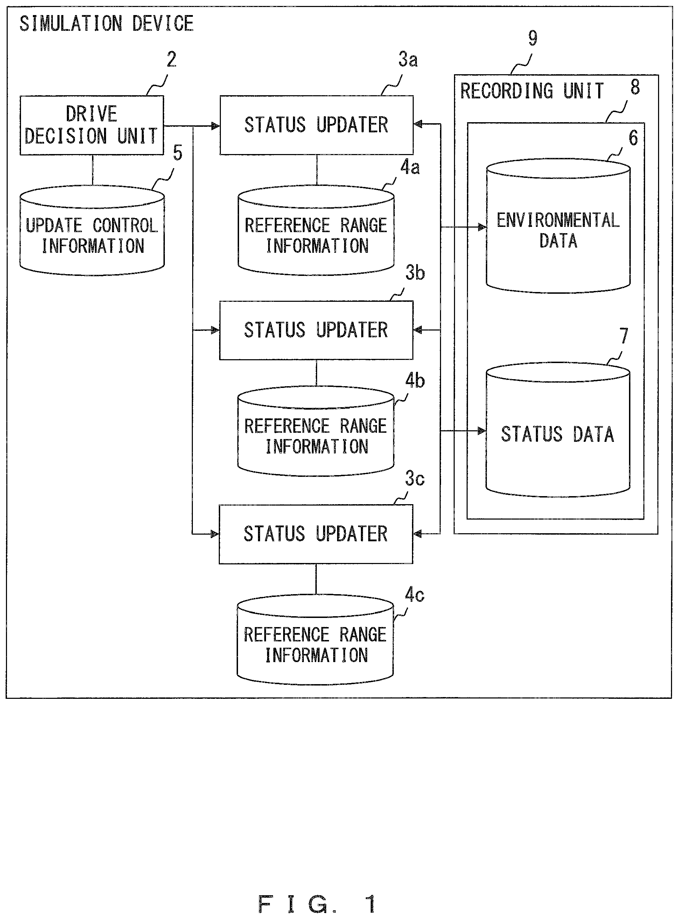

FIG. 1 is a functional block diagram illustrating an example of the configuration of a simulation device according to the first embodiment. A simulation device 1 of FIG. 1 simulates the status changes or drive (motion) of one or a plurality of movable bodies across the area of a specified range. The simulation device 1 includes status updaters 3a-3c which divide originally one status updating process into a plurality of hierarchies and performs a status updating process for each of the hierarchies, and includes a drive decision unit 2 which controls the execution of the status updaters. Moreover, the simulation device 1 is accessible to a recording unit 9, where the recording unit 9 records the simulation data which includes status data 7 representing the status of a movable body and environmental data 6 representing the information on a possible factor in changing the status of the movable body. In the present embodiment, the process is performed in three hierarchies by using three status updaters, but the number of hierarchies is not specifically limited. For example, the number of hierarchies of status updaters, i.e., the number of status updaters 3, is variable depending on the scale of simulation.

Each of the status updaters 3a-3c refers to simulation data 8, and updates the status data 7 of the movable body according to the referred data. The drive decision unit 2 provides instructions to update the status data obtained by each of the status updaters 3a-3c. Each of the status updaters 3a-3c is accessible to reference range information 4a-4c indicating the range of the simulation data referred to in the above-mentioned update. The status updaters 3a-3c refer to the simulation data in the range indicated by the reference range information 4a-4c to update the status data of the movable body.

As described above, the status updaters 3a-3c have a function of selecting a reference range for selecting the simulation data in the range indicated by the reference range information 4a-4c. The reference range information 4a-4c may be recorded in the recording unit 9, but where the reference range information 4a-4c is recorded is not specifically limited. A reference information selecting unit having the reference range information and the above-mentioned function of selecting a reference range may be arranged in the simulation device 1. Moreover, the data configuration of the reference range information may be changed depending on the scale of simulation.

The drive decision unit 2 is accessible to update control information 5 in which the timing of updating each hierarchy of the status updaters 3a-3c and the drive decision unit 2 instructs the status updaters 3a-3c to perform an update at the timing defined in the update control information 5.

According to the configuration of FIG. 1, each of the status updaters 3a-3c is accessible to the reference range information which indicates the range of different simulation data, and the drive decision unit 2 can control the timing of each status updating process (for example, the switching of the status updating process to be executed is controlled) according to the data referred to by each of the status updaters 3a-3c. The simulation by the simulation device 1 is performed as the status updaters 3a-3c refer to the simulation data 8 and repeat updating of the status data 7 according to the referred simulation data. Here, the status updating process is performed by each of the status updaters 3a-3c divided into multiple hierarchies, each of which performs the process of each of the hierarchies. Further, the timing of updating in each of the hierarchies and the range of the simulation data to be referred to are set according to the reference range information 4a-4c or the update control information 5. As described above, the simulation device 1 is configured to divide the status updating process into hierarchies, and to control the timing of updating in each of the hierarchies or the reference range information. Accordingly, it is possible to refer to the simulation data and to perform the status updating processes in an efficient manner. As a result, it is possible to cut down the total amount of data referred to in the status updating processes, thereby enabling large scale simulation.

In the configuration above, it is preferable that the timing of updating each of the status updaters 3a-3c indicated by the update control information 5 is defined according to the range of the simulation data indicated by the reference range information 4a-4c. Accordingly, it is possible to perform the status updating processes at an appropriate timing according to the data referred to in the respective status updating processes.

For example, as will be described later, it is possible to control the status updating processes such that the status updating process of an upper hierarchy refers to the simulation in a wider range and the status updating process of a lower hierarchy refers to the simulation in a narrower range. Further, it is possible to extend the length of execution interval time for the status updating process having a wider reference range of the simulation data. Accordingly, it is possible to reduce the frequency of executing the process in which the amount of the data to be referred to is large and thus a long time and a heavy load are required.

In particular, it is preferable that the update control information 5 include the cycle in which the status updaters 3a-3c refer to the simulation data 8, and for the cycle in which the status updaters 3a-3c refer to the simulation data to become longer as the range of the simulation data indicated by the reference range information 4a-4c becomes wider. Accordingly, it is possible to efficiently reduce the total amount of the simulation data which is referred to in the status updating process performed at constant time intervals (in constant cycles).

The status data 7 is associated with the movable body, and the environmental data 6 is recorded in association with the position information indicating the position at which a factor exists. The range of the simulation data 9 is indicated by an area with reference to the position at which the movable body exists, and the status updaters 3a-3c refer to the status data of the movable body existing in the area and the environmental data of the factor existing in the area. In this case, the range of the simulation data 8 indicated in the reference range information can be represented by an area with reference to the position at which the movable body exists, and the status updaters 3a-3c can refer to the status data of the movable body existing in the area and the environmental data of the factor existing in the area. Accordingly, it is for example possible to achieve localization such that the range of the simulation data in the data referring process of a short cycle becomes spatially small.

The status updaters 3a-3c may change the range of the simulation data 8 indicated in the reference range information 4a-4c by using the timing of updating of each of the status updaters 3a-3c in the update control information 5 or the velocity of the movable body. The velocity of the movable body is included, for example, in the status data 7, and is updated by the status updaters 3a-3c. Accordingly, it is possible to flexibly control the amount of the simulation data in the status updating processes on the basis of the velocity of the movable body and the timing of updating and according to the status of the movable body. For example, the distance of travel for a certain period of time becomes long when the velocity of the movable body is fast, and thus it is possible to perform control such that the range of the simulation data to be referred to will become wider.

By way of example, it is assumed in the simulation device 1 of the present embodiment that the movable body is a vehicle moving on the road. Of the status updaters 3a-3c, the status updater 3a refers to the environmental data 6 which includes the information of the road connection in the first area including the position of the vehicle, and updates at least the route from the current position of the vehicle to the destination. The status updater 3b refers to the status data 7 of the other vehicles in the second area including the position of the vehicle, and updates at least the lane in which the vehicle is traveling. The status updater 3c refers to the status data of the other vehicles in the third area including the position of the vehicle, and updates at least the velocity, direction, and position of the vehicle. The first area, the second area, and the third area may have different sizes in a decremental order.

The simulation device 1 may be realized by installing a specified program to general-purpose computers such as a personal computer or a server machine. Apart from general-purpose computers, the simulation device 10 may be formed, for example, by a computer integrated into electronic equipment such as a vehicle-installed information terminal, a mobile phone, a PDA (Personal Digital Assistant), or an electric home appliance. Alternatively, the function of the simulation device 1 may be distributed over a plurality of computers whereby a plurality of computers configure the simulation device 1.

The functions of the drive decision unit 2 and the status updaters 3a-3c are realized as a processor such as a CPU executes a specified program. In other words, a program for realizing the above-described functions on a computer or a recording medium on which the program is recorded is also an embodiment of the present invention. Moreover, the recording unit 9 and means for recording the update control information 5 and the reference range information 4a-4c are realized by an integrated storage device of a computer or by a storage device accessible by the computer.

Next, the simulation by the simulation device 1 will be described with reference to some specific examples. Here, by way of example, cases will be described in which the simulation device 1 functions as a microsimulator which reproduces the traffic flow by simulating the motion of individual vehicles moving in the virtual space. Here, the motion of a vehicle includes at least one of the behavior of a driver who drives a vehicle (for example, the act of selecting and driving in a non-busy lane depending on a congestion state) and the physical movement of a vehicle body determined by the operations of the driver (for example, a change in the direction of the vehicle body due to steering).

In this case, the environmental data includes the road data of a path through which a vehicle travels in the virtual space. The status data includes the vehicle status data which indicates the status of the vehicle existing in the virtual space. The road data includes, for example, road connection information indicated by nodes and links, map information, traffic signals, facilities, the shape of the road, and the status of a road surface. For example, the nodes indicate intersections, and the links indicate the roads, where unique IDs are assigned to the respective nodes and links. The vehicle status data includes, for example, the vehicle position, the direction of the vehicle, the velocity, and the route to a destination.

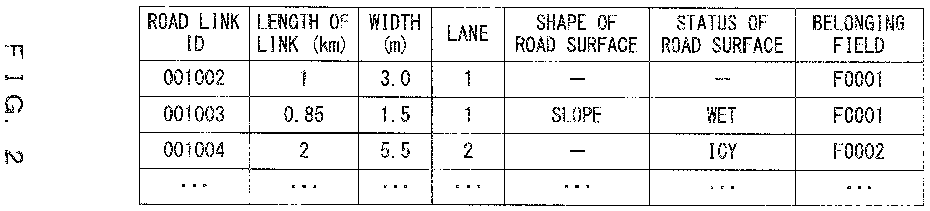

FIG. 2 is a diagram illustrating the contents of road links that are examples of the road connection information included in the environmental data. In the example of FIG. 2, link length, width, the lane, the shape of the road surface, the condition of a road surface, and the assigned field are associated with each road link ID and recorded.

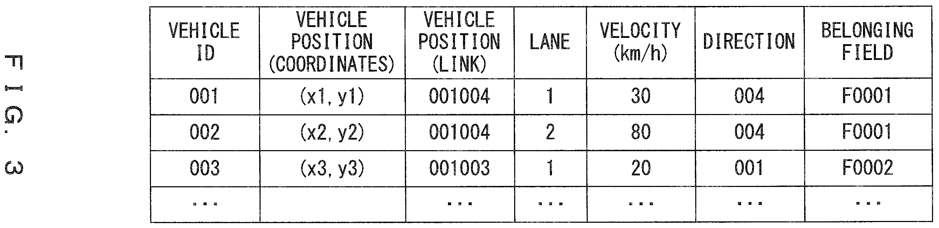

FIG. 3 is a diagram illustrating the contents of vehicle status data. In the example of FIG. 3, a vehicle position (coordinates), a vehicle position (link), a lane, velocity, a direction, and the assigned field are associated with each vehicle ID and recorded. The vehicle position (coordinates) is indicated, for example, by values of latitude and longitude. The vehicle status data of FIG. 3 is referred to and updated when the status updating processes of the status updaters 3a-3b are performed.

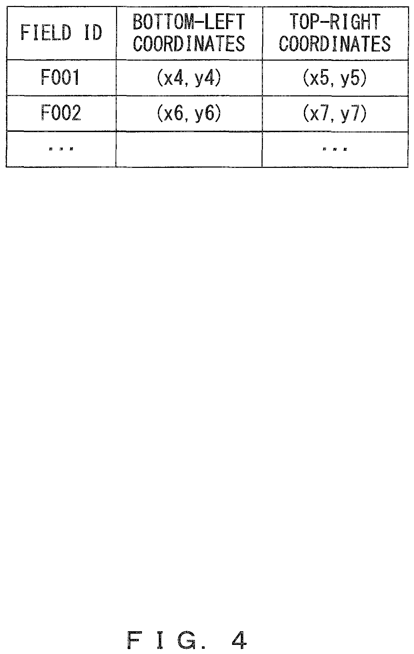

FIG. 4 is a diagram illustrating examples of the data defining the fields, which is an example of the position information indicating the position in the virtual space. Here, the fields are a number of areas obtained by dividing the virtual space to be analyzed. A field is a part of the area in the virtual space. In the example of FIG. 4, a field is a rectangular area, and is indicated by the bottom-left coordinates and top-right coordinates of the rectangular area. Each of the fields has a unique ID. As illustrated in FIGs. 2 and 3, the road link ID, the vehicle ID, and the field ID are associated with each other and recorded. Accordingly, it is possible for the road link and the vehicle status to be associated with the position information and recorded.

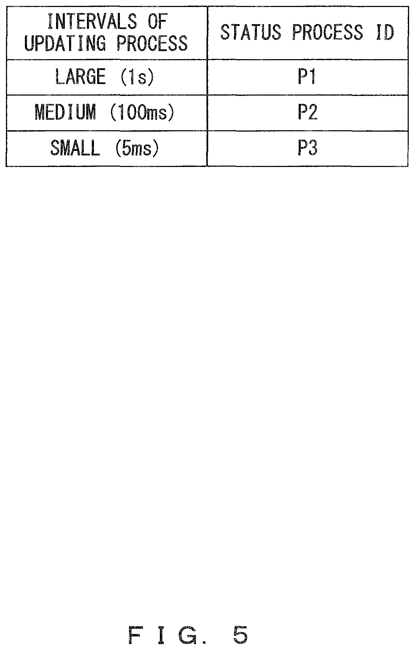

FIG. 5 is a diagram illustrating an example of the update control information 5. In the example of FIG. 5, intervals of the updating process are associated with status update IDs and are recorded. The status update IDs "P1", "P2", and "P3" represent the status updating processes by the status updaters 3a-3c, respectively. The interval of the updating process represents a cycle of performing the status updating process (i.e., a cycle of referring to the simulation data). The drive decision unit 2 controls the status updaters 3a-3c according to the update control information of FIG. 5 such that the status updater 3a, the status updater 3b, and status updater 3c execute the status updating process in sequence for every Is, 100ms, and 5ms, respectively. As described above, the update control information includes the information for identifying each hierarchy of the divided status updating process (or of the status updater), and the information indicative of the timing of execution in each hierarchy. In this example, a longer execution interval time interval is set to a status updater of an upper hierarchy. Accordingly, it is possible to improve the efficiency of the updating process.

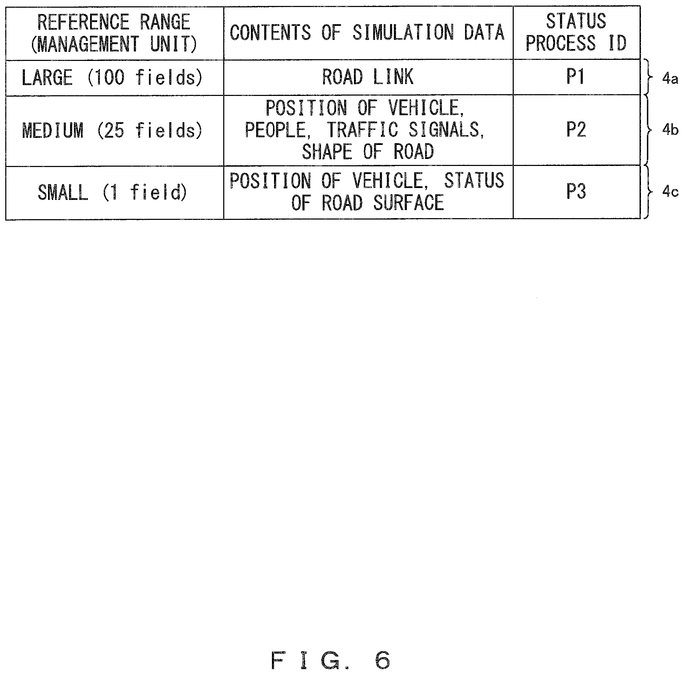

FIG. 6 is a diagram illustrating an example of the reference range information 4a-4c. In the example of FIG. 6, the reference range information 4a-4c is recorded in one table. In the present embodiment, the reference range information is not illustrated within the recording unit, and it is assumed that the reference range information is on a table of the main memory. However, the reference range information may be read from the recording unit. The reference range and the contents of simulation data are recorded for every status processing unit. For example, according to the reference range information 4a, the status updater 3a obtains from the simulation data 8 the road link belonging to 100 fields around the current position of the vehicle in the status updating process P1. The status updater 3b obtains from the simulation data 8 the vehicle information, traffic signals, and the shape of the road belonging to 25 fields around the current position of the vehicle in the status updating process P2. The status updater 3c obtains the vehicle information of the other vehicles in the same field as the current position of the vehicle, and the status of a road surface.

Here, the reference range information 4a-4c has predetermined fixed values, but the reference range information 4a-4c may be variable. For example, the status updaters 3a-3c may create the reference range information 4a-4c indicative of the range of the simulation data 8 by using the cycle of each of the status updaters 3a-3c in the update control information 5 and the velocity of the vehicle. In particular, it is possible that the maximum speed of the vehicle is preliminarily recorded in the status data, and that the size of the reference range is determined according to the maximum speed. When the maximum speed is greater, the size of the area of data to be referred to (here, this is the number of fields) can be larger.

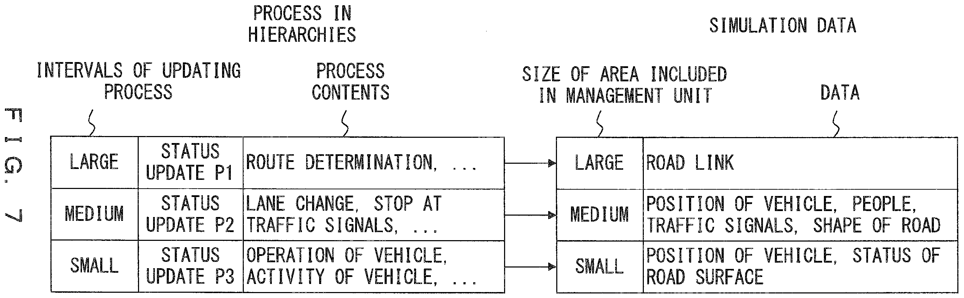

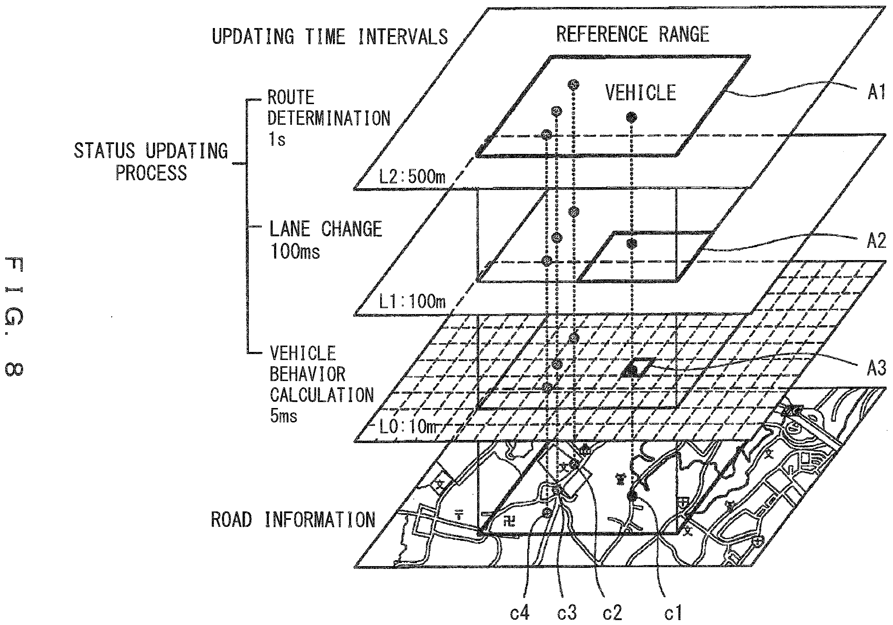

FIGs. 7 and 8 are diagrams schematically illustrating the status updating process which is divided into hierarchies according to the present embodiment. In the present embodiment, as illustrated in FIGs. 7 and 8, the status updating process is divided into three hierarchies. In the three hierarchies, the updating time intervals (cycles) vary in stages in the order of large, medium, and small.

In the status updating process P1 whose hierarchy has a large cycle, the route from the current position of a vehicle to the destination is determined and updated. For this reason, in the status updating process P1, the road link belonging to the 100 fields (management unit A1) which include the current position of the vehicle is obtained from the simulation data 8.

In the status updating process P2 whose hierarchy has a medium cycle, it is determined that there has been a lane change of the vehicle and a stop at a traffic signal, and thereby the lane in which the vehicle is traveling is updated and the existence of a stop is noted. For this reason, the data of the position of the other vehicles, people, traffic signals, and the shape of the road belonging to 25 fields (management unit A2) which include the current position of the vehicle is obtained from the simulation data.

In the status updating process P3 whose hierarchy has a small cycle, the operation of the vehicle and the activity of the vehicle (velocity, direction, position) are updated. For this reason, the data of the position of the other vehicles belonging to the field of the current position of the vehicle (management unit A3) and the status of a road surface are obtained from the simulation data.

The status updating processes P1-P3 are performed for each of the cars c1-c4 in the virtual space. In other words, the status updaters 3a-3c update the status data of each of the cars c1-c4 in the virtual space.

The cycles of updating of the hierarchies vary in stages in the order of large, medium, and small. The data referred to in the hierarchies and the size of the area (the number of fields) included in the reference range (management unit) also vary. As described above, (1) the vehicle status updating process is divided into multiple hierarchies according to the time intervals of the processes, and (2) the simulation data is classified according to the time intervals of being referred to and the simulation data whose referring process time intervals are longer is divided with a large range and is managed. Accordingly, it is possible to reduce the total amount of data referred to in the vehicle status updating process for certain period of time. As a result, it is possible to increase the size by executing the vehicle status updating process at constant time intervals. Note that it is possible to reduce the total amount of data referred to in the process only by executing the process of (1) above. Due to the combination of (1) and (2), it is possible to further reduce the total amount of the simulation data.

The hierarchies of the status updating process of FIGs. 7 and 8 may be determined, for example, according to the decision-making model of humans. As a representative model of human decision making, a three-hierarchy model having the hierarchies of strategy, tactics, and operations may for example be used. As specific examples, a process of determining a route at the level of strategy, a process of selecting a driving mode such as a lane change or a stop at a traffic signal at the level of tactics, and a process of calculating the amount of operation of an accelerator pedal and a brake pedal and thereby physically calculating the activity of the vehicle may be executed by the respective status updaters.

It is not necessary for these processes in the hierarchies to be executed at the same time, and the processes may be executed at unique update intervals. For example, at the level of operational and physical calculation, it is preferable to perform updating at process intervals of several milliseconds so as to control the motion of a vehicle in a sufficiently smooth manner. At the level of tactics, it is necessary and preferable to perform an updating process at process intervals of several hundred milliseconds, as the minimum unit of the cognition and decision-making process of humans is around 100 milliseconds. At the level of strategy, it is preferable to perform an updating process at process intervals of several seconds so as to realize the long-term decision-making process of humans.

As described above, by dividing the status updating process into hierarchies according to the hierarchies of the decision-making model of humans, it is possible to appropriately set the timing of the status updating process according to the level of the decision-making process of a person who is driving the vehicle. For example, due to the hierarchies of the decision-making process, it is possible to perform the process according to the time granularity of the hierarchies. Accordingly, it is also possible to limit the special granularity of the range of collecting the information required for the process. There is another advantageous effect wherein the delayed cognition of humans can be easily simulated.

For example, the process of determining whether a collision with other vehicles has occurred occupies a large proportion of the computational complexity at the level of physical calculation, but even if the speed of an automobile is 200 km/h, the distance that the vehicle travels during the process interval of several milliseconds should be within one meter. Consequently, it is possible to reduce the computational complexity by performing collision determination only for the other vehicles included in the range of one meter around the vehicle.

As another example, the case of turning right at an intersection at the level of tactics will be considered. Whether or not to stop is determined depending on the state of the intersection in front. If the vehicle is traveling at a speed of 100km/h, the distance that the vehicle travels before it can stop in view of the time taken for a person to realize the danger and start braking hard (about 0.2 second) is calculated as about 100m. Consequently, the process of determining the possibility of a collision may be performed only for other vehicles in the range calculated as above.

As described above, it is possible to reduce the amount of data to be referred to by dividing the vehicle status updating process into hierarchies and limiting the range of collecting information, thereby reducing the computational complexity in the vehicle status updating process. Moreover, if the hierarchies of human decision making are applied to the hierarchies of the status updating process, it is possible to perform a simulation in which the process of decision making including the delayed cognition of humans is considered. Furthermore, if the vehicle status updating process is divided into multiple hierarchies, it is possible to manage the simulation data at divided sections, and it thus becomes easy to perform the process in a distributed environment by using a number of computing machines.

Hereinafter, the reduction effect in the computational complexity according to the present embodiment will be described.

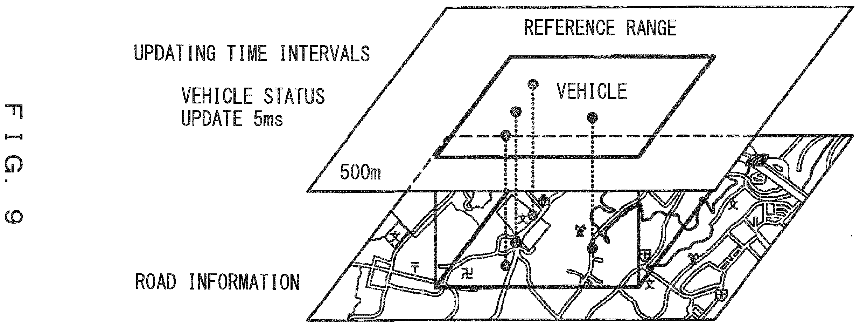

FIG. 9 is a diagram schematically illustrating the status updating process and simulation data range in cases where the status updating process is not divided. In the example of FIG. 9, the cycle of the status updating process is constant (5ms) . Moreover, the management unit is 100 fields. In other words, all the simulation data belonging to the 100 fields is referred to, and the process of updating the status of the vehicle is performed in a cycle of 5ms.

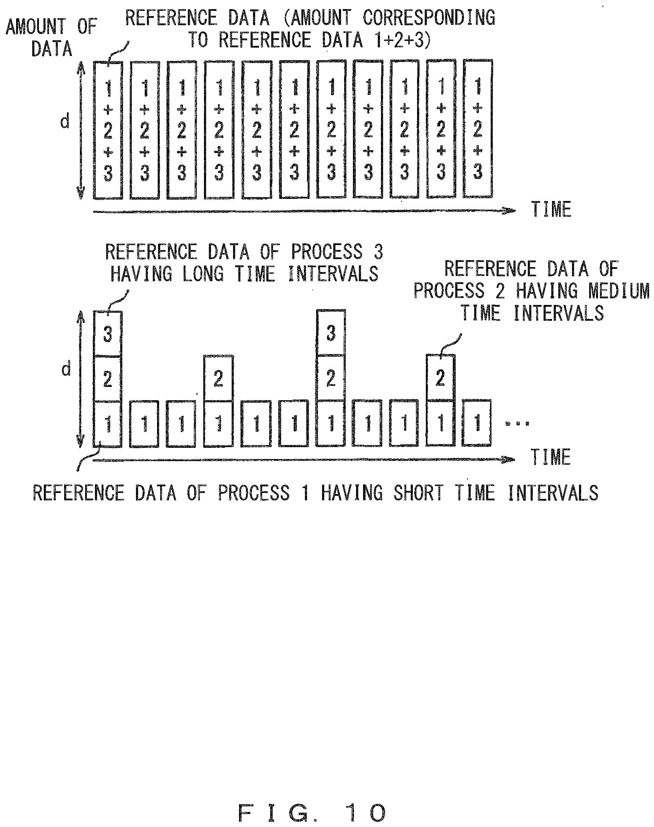

FIG. 10 is a diagram illustrating the amount of the simulation data (upper level) in cases where the status updating process is not divided, and the amount of the simulation data (lower level) in cases where the status updating process is divided such that each of the divided status updating processes has a different cycle, as illustrated in FIG. 9. As illustrated in FIG. 10, all the data is referred to in a single status updating process in the case of FIG. 9. On the other hand, if the process of the status updater is divided into multiple hierarchies according to the process intervals (the cycle of updating), the amount of data referred to in a certain period of time can be reduced. In other words, if the status updating process is not divided, it is necessary to refer to all of the simulation data (1+2+3) every time, which corresponds to the data of three divided hierarchies. If the status updating process is divided, the frequency of being referred to in a certain period of time is reduced for simulation data (3) having long time intervals and simulation data (2) having medium time intervals, relative to the case in which the status updating process is not divided.

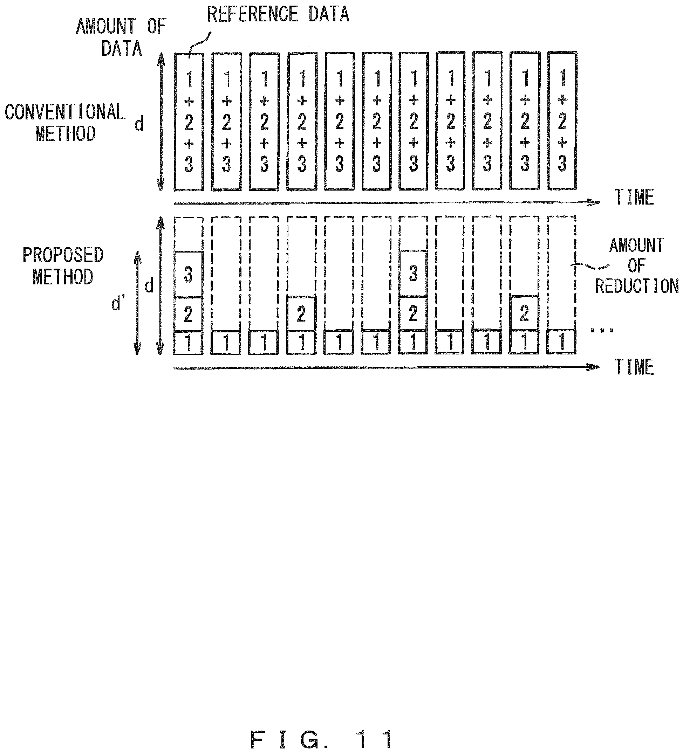

FIG. 11 is a diagram illustrating the amount of the simulation data (lower level) in cases where the status updating process is divided into hierarchies and localization is further performed so as to decrease the range of the simulation data in the status updating process of a short updating time interval, and the amount of the simulation data (upper level) in cases where the status updating process is not divided. The amount of the simulation data illustrated at the lower level of FIG. 11 is an example of the case in which the range of the simulation data is for example set to be smaller for the status updating process having shorter time intervals in the three status updating process hierarchies, as illustrated in FIG. 8. As described above, the total amount of simulation data d' of the three hierarchies becomes smaller than the one-time amount of the simulation data d of the case in which the status updating process is not divided. Accordingly, it is possible to further reduce the amount of data referred to in a certain period of time.

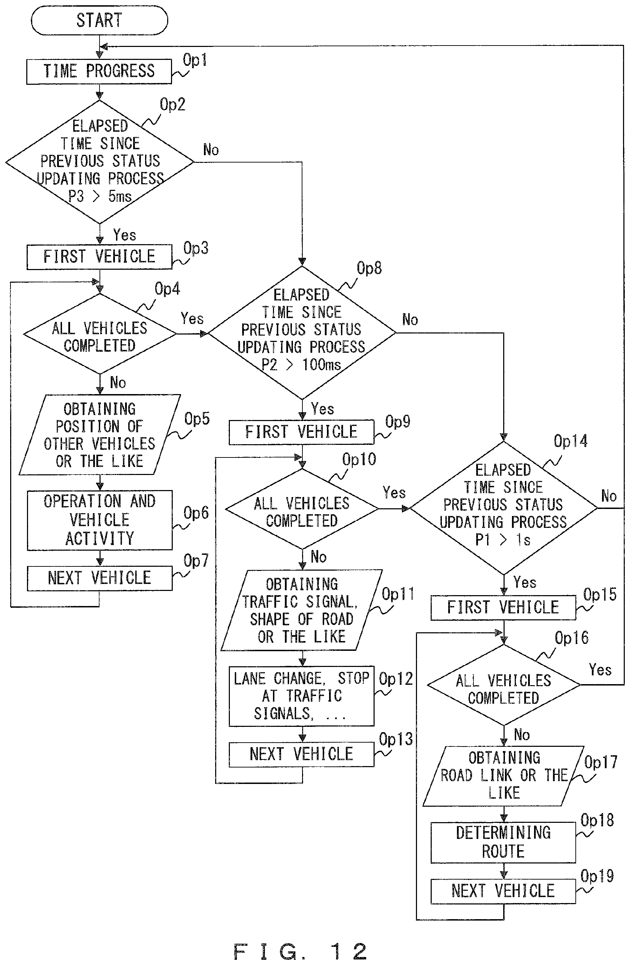

Next, an example of the operation of the simulation device 1 will be described. FIG. 12 is a flowchart illustrating an example of the operation of the simulation device 1. In FIG. 12, the simulation device 1 makes a clock start working when the simulation starts (Op1). Firstly, the drive decision unit 2 instructs the status updater 3a to execute the status updating process P3 when the elapsed time since the previous status updating process P3 executed by the status updater 3c exceeds 5ms ("Yes" in Op2) . When the simulation has just started and the previous status updating processes P1-P3 have not yet been performed by the status updaters 3a-3c, the drive decision unit 2 unconditionally instructs the status updaters 3a-3c to execute the status updating processes P1-P3 in sequence.

When "No" is obtained in Op2, the drive decision unit 2 determines whether the elapsed time since the previous status updating process P2 executed by the status updater 3b exceeds 100ms (Op8). When it does ("Yes" in Op8), the drive decision unit 2 instructs the status updater 3b to execute the status updating process P2. When "No" is obtained in Op8, the drive decision unit 2 determines whether the elapsed time since the previous status updating process P1 executed by the status updater 3a exceeds 1s (Op14). When it does ("Yes" in Op14), the drive decision unit 2 instructs the status updater 3a to execute the status updating process P1. Accordingly, the status updating process P3, status updating process P2, and status updating process P1 are executed for every 5ms, 100ms, and Is, respectively.

When "Yes" is obtained in Op2, the status updater 3c executes the status updating process P3 for all the vehicles in the virtual space (Op3-Op7). In particular, the status updater 3c firstly selects the first vehicle in the virtual space (Op3), and determines whether the status updating process P3 has been completed for all the vehicles (Op4). When it is determined that the status updating process P3 has been completed only for the first vehicle, it is judged that "No" is obtained in Op4. The status updater 3c obtains the data of the position of other vehicles or the like from the simulation data 8 (Op5) . At the same time, the status updater 3c obtains the position of other vehicles existing in the field to which the selected vehicle belongs and the status of a road surface in the field in accordance with, for example, the reference range information 4c of FIG. 6. The status updater 3c updates the status data of the selected vehicle by using the obtained data (Op6). Here, by way of example, the operation and the vehicle activity are updated. Once the status data of the selected vehicle is updated, the next vehicle is selected (Op7) . The processes of Op5-Op7 are repeated for all the vehicles in the virtual space (repeated until "Yes" is obtained in Op4). With the above, one sequence of the status updating process P3 is completed.

When the status updating process P3 is terminated (when "Yes" is obtained in Op4), the drive decision unit 2 instructs the status updater 3b to execute the status updating process P2. The status updater 3b executes the status updating process P2 for all the vehicles in the virtual space (Op9-Op13). In particular, the status updater 3b firstly selects the first vehicle in the virtual space (Op9), and determines whether the status updating process P2 has been completed for all the vehicles (Op10). When it is determined that the status updating process P2 has been completed only for the first vehicle, it is judged that "No" is obtained in Op10. The status updater 3b obtains the data of the position of other vehicles or the like from the simulation data 8 (Op5) . At the same time, the status updater 3b obtains the position of other vehicles existing in the field to which the selected vehicle belongs and the surrounding field (total of 25 fields), the position and status of a person, the status of a traffic signal, and the shape of the road in accordance with, for example, the reference range information 4b of FIG. 6. The status updater 3b updates the status data of the selected vehicle by using the obtained data (Op12). Here, by way of example, a lane change of the selected vehicle and a stop at a traffic signals are determined to exist and updated. Once the status data of the selected vehicle is updated, the next vehicle is selected (Op13). The processes of Op11-Op13 are repeated for all the vehicles in the virtual space (repeated until "Yes" is obtained in Op10).

When the status updating process P2 is terminated (when "Yes" is obtained in Op10), the drive decision unit 2 instructs the status updater 3a to execute the status updating process P1. The status updater 3a executes the status updating process P1 for all the vehicles in the virtual space (Op15-Op19). In particular, the status updater 3a firstly selects the first vehicle in the virtual space (Op15), and determines whether the status updating process P1 has been completed for all the vehicles (Opl6) . When it is determined that the status updating process P1 has been completed only for the first vehicle, it is judged that "No" is obtained in Op16. The status updater 3a obtains the data of the road link or the like from the simulation data 8 (Op17). At the same time, the status updater 3a obtains the road link existing in the field to which the selected vehicle belongs and the surrounding field (total of 100 fields) in accordance with, for example, the reference range information 4a of FIG. 6. The status updater 3a updates the status data of the selected vehicle by using the obtained data (Op18). Here, by way of example, the route of the vehicle selected by the road link is determined and updated. Once the status data of the selected vehicle is updated, the next vehicle is selected (Op19). The processes of Op17-Op19 are repeated for all the vehicles in the virtual space (repeated until "Yes" is obtained in Op16).

As described above, due to the processes of FIG. 12, it is possible to reduce the total amount of data referred to in the vehicle status updating process of a certain period of time, and to execute the vehicle status updating process at constant time intervals. For example, compared with the case in which all the simulation data (road link, traffic signal, position of other vehicles, or the like) is read at constant time intervals at an individual vehicle and the vehicle status updating process is executed, it becomes possible to reduce the total amount of data referred to in the process. As a result, it is possible to prevent the amount of data referred to in the vehicle status updating process of each vehicle from increasing due to the increase in the number of vehicles or the increase in the target range. Consequently, it becomes easy to increase the scale.

In recent years, traffic policies have been changing with the advance of communications infrastructure or vehicle-installed devices. With dynamic route guidance systems (DRGS), collection of individual information of individual vehicles, or distribution of individual instruction according to individual vehicles will be possible. In order to evaluate such a traffic policy, a microsimulator is required that is of a large scale and has a wide range capable of covering one local district, and that is capable of simulating in detail the diversity of the driving behavior of the drivers of individual vehicles who receive the information. According to the present embodiment, it is possible to provide such a microsimulator.

### [Second Embodiment]

In the present embodiment, the case will be described in which the simulation device 1 functions as a microsimulator by simulating the motion of individual people moving in the virtual space and by duplicating the flow of people in the facility. The configuration of the device may be the same as that of FIG. 1.

In the present embodiment, the environmental data includes the path data relating to the path on which people move in the virtual space. The status data includes the person status data which indicates the status of people existing in the virtual space (facility such as a store). The path data includes, for example, path connection information indicated by nodes and links, position information, a layout of facilities, information of products on display or exhibits, or the like. Each piece of the person status data includes, for example, the position of people, direction, velocity, route to destination, or the like.

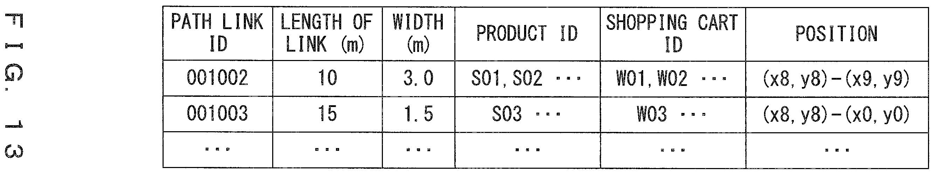

FIG. 13 is a diagram illustrating the contents of a path link as an example of the path connection information included in the environmental data 6 of the present embodiment. In the example of FIG. 13, the link length, width, product ID, shopping cart ID, and position information are associated with each path link ID and recorded.

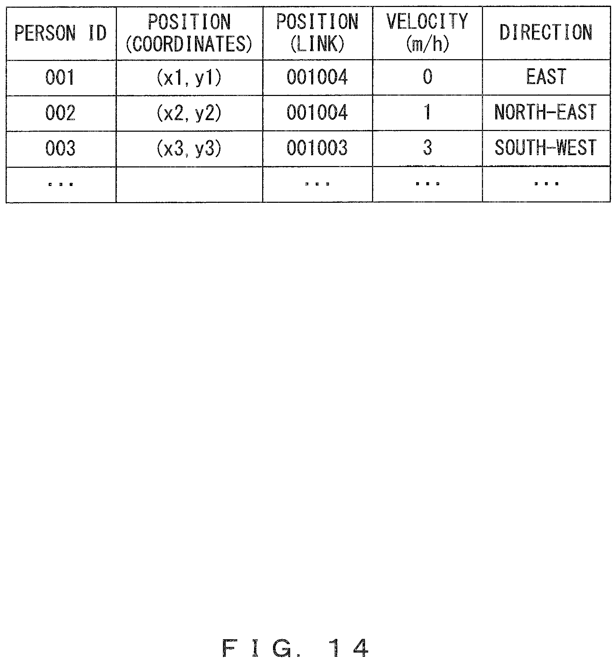

FIG. 14 is a diagram illustrating an example of the contents of the person status data. In the example of FIG. 14, positions (coordinates), positions (links), velocity, and directions are associated with each person ID and recorded. The person status data of FIG. 14 is referred to and updated when the status updating processes of the status updaters 3a-3b are performed.

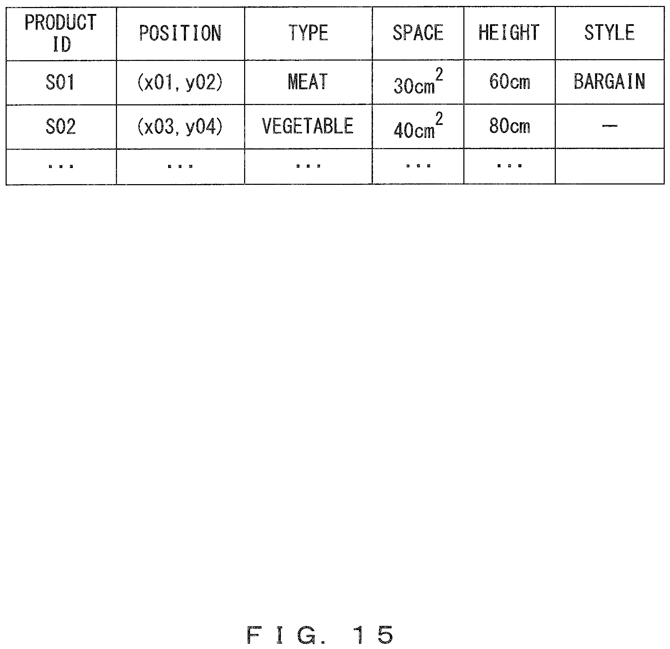

FIG. 15 is a diagram illustrating an example of the contents of product data. In the example of FIG. 15, the position of a display (coordinates), type of product, amount of space, and height are associated with each product ID and recorded.

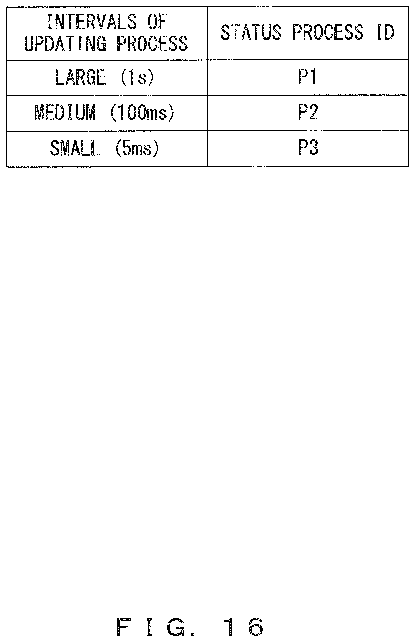

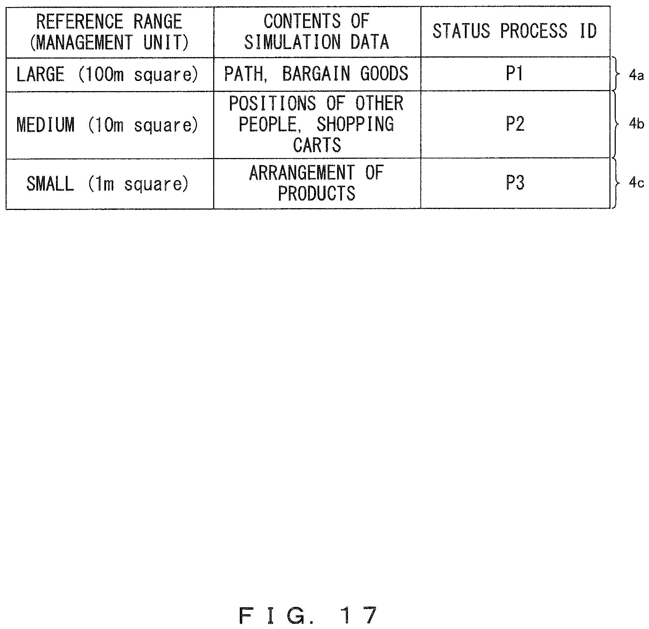

FIG. 16 is a diagram illustrating an example of the update control information 5 according to the present embodiment. FIG. 17 is a diagram illustrating an example of the reference range information 4a-4c according to the present embodiment. For example, according to the reference range information 4a, the status updater 3a obtains from the simulation data 8 the path link and bargain goods belonging to the area within a radius of 100m around the current position of the person in the status updating process P1. The status updater 3b obtains from the simulation data 8 the positions of other people and shopping carts belonging to the area within a radius of 10m around the current position in the status updating process P2. The status updater 3c obtains the data indicating the arrangement of products in the area within a radius of 1m around the current position of the person.

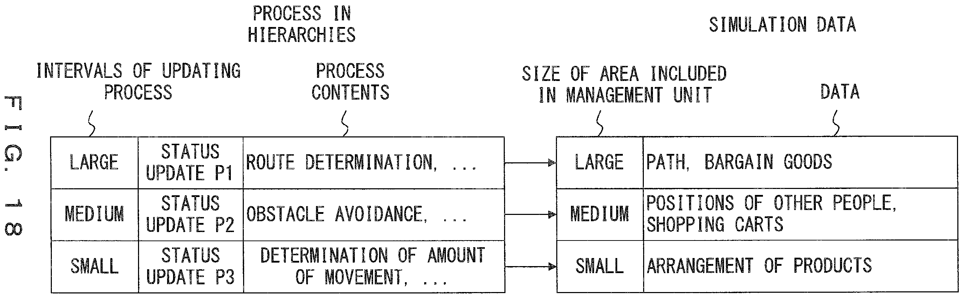

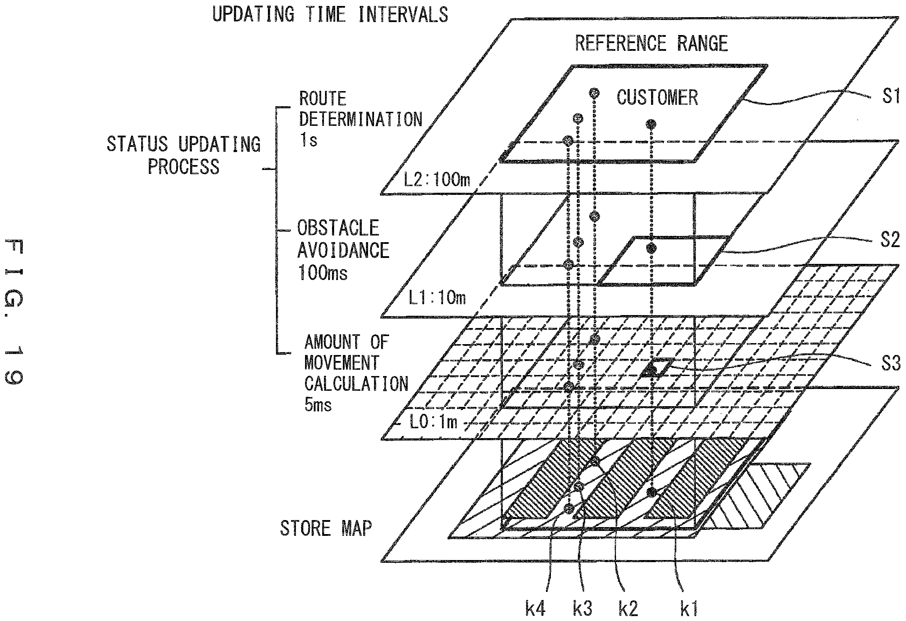

FIGs. 18 and 19 are diagrams schematically illustrating the status updating process which is divided into hierarchies according to the present embodiment. In the present embodiment, as illustrated in FIGs. 18 and 19, the status updating process is divided into three hierarchies. In the three hierarchies, it is assumed that the updating time intervals (cycles) vary in stages in the order of large, medium, and small.

In the status updating process P1 whose hierarchy has a large cycle, the route from the current position of a person to the destination is determined and updated. For this reason, in the status updating process P1, the path link belonging to the area within a radius of 100m around the current position of the person (management unit S1) is obtained from the simulation data 8.

In the status updating process P2 whose hierarchy has a medium cycle, an obstacle avoidance is determined to exist, thereby updating the direction in which a person is traveling. For this reason, the data indicating the position of obstacles such as other people or shopping carts in the area within a radius of 10m around the current position of the person (management unit S2) is obtained from the simulation data.

In the status updating process P3 whose hierarchy has a small cycle, the amount of movement by a person is updated. For this reason, the data indicating the arrangement of the products in the area within a radius of 1m around the current position of the person (management unit S3) is obtained from the simulation data. The status updating processes P1-P3 are performed for each of all the people k1-k4 in the virtual space.

The updating time intervals (cycles) in the status updating process of FIGs. 18 and 19 vary in stages in the order of large, medium, and small. The data referred to in the hierarchies and the size of the area (the number of fields) included in the reference range (management unit) also vary. For this reason, it is possible to reduce the total amount of data referred to in the person status updating process of a certain period of time. Moreover, the process of dividing the information updating process into hierarchies can be determined according to the present embodiment according to the decision-making model of humans. Accordingly, it becomes possible to perform a simulation in which the process of decision making such as the delayed cognition of humans is taken into consideration. According to the present embodiment, it is possible to simulate, for example, the movement of a customer in the store.

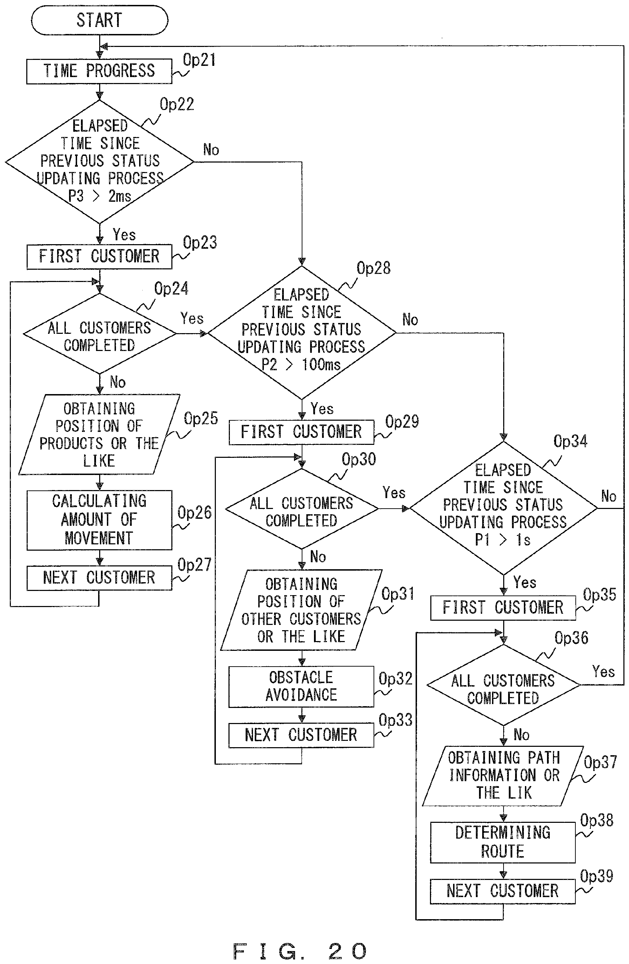

FIG. 20 is a flowchart illustrating an example of the operation of a simulation device according to the present embodiment. In FIG. 20, the simulation device 1 makes a clock start working when the simulation starts (Op21). Firstly, the drive decision unit 2 instructs the status updater 3a to execute the status updating process P3 when the elapsed time since the previous status updating process P3 executed by the status updater 3c exceeds 5ms ("Yes" in Op22).

When "No" is obtained in Op22, the drive decision unit 2 determines whether the elapsed time since the previous status updating process P2 executed by the status updater 3b exceeds 100ms (Op28). When it does ("Yes" in Op28), the drive decision unit 2 instructs the status updater 3b to execute the status updating process P2. When "No" is obtained in Op28, the drive decision unit 2 determines whether the elapsed time since the previous status updating process P1 executed by the status updater 3a exceeds 1s (Op34). When it does ("Yes" in Op34), the drive decision unit 2 instructs the status updater 3a to execute the status updating process P1. Accordingly, the status updating process P3, status updating process P2, and status updating process P1 are executed for every 5ms, 100ms, and 1s, respectively.

When "Yes" is obtained in Op22, the status updater 3c executes the status updating process P3 for all the customers in the virtual space (Op23-Op27). In particular, the status updater 3c firstly selects the first customer (person) in the virtual space (Op23), and determines whether the status updating process P3 has been completed for all the customers (Op24). When it is determined that the status updating process P3 has been completed only for the first customer, it is judged that "No" is obtained in Op24. The status updater 3c obtains the data indicating the arrangement of products from the simulation data 8 (Op25) . At the same time, the status updater 3c obtains the types of products in the area within a radius of 1m around the position of the selected customer, and obtains the position, amount of space, and height in accordance with, for example, the reference range information 4c of FIG. 17. The status updater 3c updates the status data of the selected customer by using the obtained data (Op26). Here, by way of example, the amount of the movement of a customer is updated. Once the status data of the selected customer is updated, the next customer is selected (Op27). The processes of Op25-Op27 are repeated for all the customers in the virtual space (repeated until "Yes" is obtained in Op24). With the above, one sequence of the status updating process P3 is completed.

When the status updating process P3 terminates (when "Yes" is obtained in Op24), the drive decision unit 2 instructs the status updater 3b to execute the status updating process P2. The status updater 3b executes the status updating process P2 for all the customers in the virtual space (Op29-Op33). In particular, the status updater 3b firstly selects the first customer in the virtual space (Op29), and determines whether the status updating process P2 has been completed for all the customers (Op30). When it is determined that the status updating process P2 has been completed only for the first customer, it is judged that "No" is obtained in Op30. The status updater 3b obtains the data of the positions of other customers or the like from the simulation data 8 (Op31) . At the same time, the status updater 3b obtains the positions of other customers in the area within a radius of 10m around the current position of the selected customer, and the positions of shopping carts in accordance with, for example, the reference range information 4b of FIG. 17. The status updater 3b updates the status data of the selected customer by using the obtained data (Op32). Here, by way of example, the existence of obstacle avoidance for the selected customer is determined, and the traveling direction is updated. Once the status data of the selected customer is updated, the next customer is selected (Op33). The processes of Op31-Op33 are repeated for all the customers in the virtual space (repeated until "Yes" is obtained in Op30).

When the status updating process P2 terminates (when "Yes" is obtained in Op30), the drive decision unit 2 instructs the status updater 3a to execute the status updating process P1. The status updater 3a executes the status updating process P1 for all the customers in the virtual space (Op35-Op39). In particular, the status updater 3a firstly selects the first customer in the virtual space (Op35), and determines whether the status updating process P1 has been completed for all the customers (Op36). When it is determined that the status updating process P1 has been completed only for the first customer, it is judged that "No" is obtained in Op36. The status updater 3a obtains the data of the path link or the like from the simulation data 8 (Op37). At the same time, the status updater 3a obtains the path link of the path existing in the area within a radius of 100m around the current position of the selected customer, and the data of bargain goods in accordance with, for example, the reference range information 4a of FIG. 17. The status updater 3a updates the status data of the selected customer by using the obtained data (Op38). Here, by way of example, the route of the selected customer is determined and updated according to the data of the path link and bargain goods. Once the status data of the selected customer is updated, the next customer is selected (Op39). The processes of Op37-Op39 are repeated for all the customers in the virtual space (repeated until "Yes" is obtained in Op36).

As described above, due to the processes of FIG. 20, it becomes possible to reduce the total amount of data referred to in the customer status updating process of a certain period of time, and to execute the customer status updating process at constant time intervals. For example, compared with the case in which all the simulation data (path link, product, shopping cart, position of other people, or the like) is read at constant time intervals for an individual customer and the customer status updating process is executed, it becomes possible to reduce the total amount of data referred to in the process. As a result, it is possible to prevent the amount of data referred to in the customer status updating process of each customer from increasing due to the increase in the number of customers or the increase in the target range. Consequently, it becomes easy to increase the scale.

### [Third Embodiment]

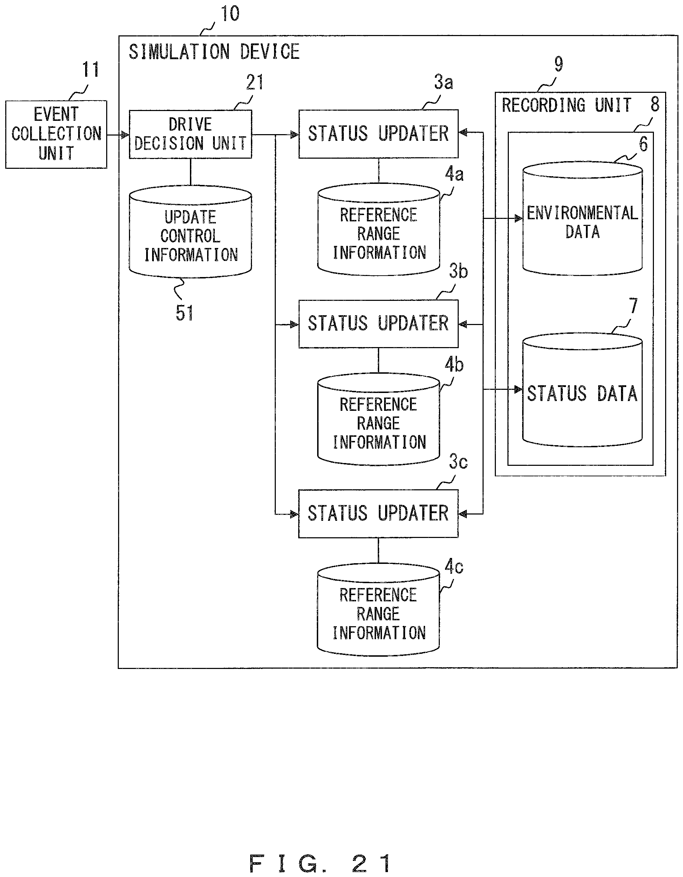

FIG. 21 is a functional block diagram illustrating the configuration of a simulation device according to the third embodiment. In FIG. 21, the same reference signs are given to the functional blocks which are the same as those of FIG. 1. In the simulation device 10 of FIG. 21, an event rule is recorded as the update control information 51. The event rule is an example of condition data, which indicates the condition for starting the status updating processes by the status updaters 3a-3c, and defines an event that functions as a condition for starting an updating process. Moreover, the simulation device 10 is configured to input outside circumstance data, which is collected by an event collection unit 11. In this configuration, the drive decision unit 21 detects an event caused in the simulation by using the event collection unit 11, and when the detected event satisfies the condition indicated by the event rule, the drive decision unit 21 instructs the status updaters 3a-3c to execute an update.

The event collection unit 11 collects events caused in the simulation, and notifies the drive decision unit 21 of the collected events. Such events include, for example, the status changes of a movable body expressed by the status data 7 or the changes in factors expressed by the environmental data 6. As specific examples of an event in the simulation of traffic flow according to the above-described first embodiment, arrival at a right-turn position or left-turn position, changes in traffic signals, the occurrence of traffic congestion, sudden changes in the weather, or the like are listed in each field. As described above, as a type of event, there are (a) events occurring due to conditions that are different for each vehicle. This type of even includes, for example, "vehicle arriving at a right-turn position or left-turn position" or "arriving at the destination". As another type of event, there are (b) events occurring only for vehicles which are included in a certain range. This type of event includes, for example, "changes in a traffic signal", "the occurrence of traffic congestion", and "change in the weather". Further, as another type of the event, the above-described [a] and [b] may be combined. This type of event includes, for example, "caught in traffic congestion, and running out of gasoline".

For example, the status updaters 3a-3c may be configured to start the updating process with events having varying time intervals of average occurrence. Accordingly, the status updating process is divided into multiple hierarchies, and thereby it becomes possible to reduce the total amount of data referred to in the process.

The present embodiment may be combined with the first or second embodiment. For example, the update control information may include both the timing of status updating processes regularly executed at specified intervals and the timing of status updating processes executed when a specified event occurs. Accordingly, the status updating process may be divided into the hierarchies in which the process is executed at specified time intervals and the hierarchies in which the process is executed when a specified event occurs.

The above-described first to third embodiments are not limited to the real-time display of the simulation. For example, it is difficult to achieve real-time processing and display in a large scale simulation. It is possible that the results of a simulation may be accumulated in advance, and after performing a simulation, for the results of simulation to be displayed on a screen or the like according to the resultant data.

## Claims

1. A simulation device (1) which simulates motion of at least one of movable bodies, the simulation device being accessible to a recording unit (9) which is configured to record simulation data (8) which includes status data (7) and environmental data (6), the status data (7) representing respective statuses of the movable bodies, the environmental data (6) representing information relating to an environment of paths on which the movable bodies move, the simulation device comprising:
a plurality of status updaters (3a-3c) configured to update the status data (7) recorded in the recording unit (9) by executing a plurality of hierarchized status update processes using the simulation data (8) recorded in the recording unit (9) and reference range information (4a-4c), the plurality of hierarchized status update processes being obtained by dividing a process of updating the status data (7) for simulating the motion into a plurality of hierarchies, the reference range information (4a-4c) being preliminarily specified for each of the plurality of hierarchized status update processes and representing a reference range to be referred to the simulation data (8) by each of the plurality of status updaters (3a-3c) for executing the plurality of hierarchized status update processes; and
a drive decision unit (2) configured to instruct the plurality of status updaters (3a-3c) to update the status data (7) at an update timing according to update control information (5) in which a timing of updating the status data (7) for each of the status updaters is defined; wherein
each of the plurality of status updaters (3a-3c) are configured to vary the reference range depending on the timing of updating of each of the plurality of status updaters (3a-3c) in the update control information (5) and a velocity of each of the movable bodies.

2. The simulation device (1) according to claim 1, wherein
the timing of an update indicated by the update control information (5) is defined according to a range of the simulation data (8) indicated by the reference range information (4a-4c).

3. The simulation device (1) according to claim 1 or 2, wherein
the update control information (5) includes a cycle in which the plurality of status updaters (3a-3c) refer to the simulation data (8), and
the cycle in which the plurality of status updaters (3a-3c) refer to the simulation data (8) becomes longer as a range of the simulation data indicated by the reference range information (4a-4c) becomes wider.

4. The simulation device (1) according to one of claims 1 to 3, wherein
the status data (7) is associated with the movable bodies, and the environmental data (6) is recorded in association with the position information indicating the position at which the environment of the paths exists,
the range of the simulation data (8) is indicated by an area with reference to the position at which the movable bodies exist, and
the plurality of status updaters (3a-3c) are configured to refer to the status data (7) of the movable bodies existing in the area and the environmental data (6) of the environment of the paths existing in the area.

5. The simulation device (1) according to one of claims 1 to 4, wherein
the timing of updating indicated by the update control information (5) is defined by condition data which indicates a condition of starting an update, and
the drive decision unit (2) is configured to detect an event caused in a simulation, and when the detected event satisfies a condition indicated in the condition data, to instruct the status updater to execute an update.

6. The simulation device (1) according to one of claims 1 to 5, wherein
the movable bodies are vehicles moving within a space or on a plane, and
the plurality of status updaters (3a-3c) includes at least
a first-hierarchy status updater configured to refer to the environmental data (6), which includes information of a path connection in a first area, including a position of one of the vehicles, and to update at least a route from a current position of the vehicle to a destination,
a second-hierarchy status updater configured to refer to the status data (7) of other vehicles in a second area, including the position of the one of the vehicles, and to update at least a lane in which the vehicle is traveling, and
a third-hierarchy status updater configured to refer to the status data (7) of other vehicles in a third area, including the position of the one of the vehicles, and to update at least velocity, a direction, and a position of the vehicle, and
the first area, the second area, and the third area have different sizes in a decremental order.

7. The simulation device (1) according to one of claims 1 to 5, wherein
the movable bodies are people moving in a space or on a plane, and
the plurality of status updaters (3a-3c) includes at least
a first-hierarchy status updater configured to refer to the environmental data (6), which includes information of a path connection in a first area, and to update at least a route from a current position of one person to a destination,
a second-hierarchy status updater configured to refer to the status data (7) of other people in a second area, and to update at least a direction in which the person is traveling, and
a third-hierarchy status updater configured to refer to the environmental data (6) in a third area, including information of at least one of present items and equipment provided for a facility, and to update an amount of movement of the person, and
the first area, the second area, and the third area have different sizes in a decremental order.

8. The simulation device (1) according to any one of claims 1 to 7, wherein each status updater (3a-3c) is configured to widen a range of simulation data indicated in the reference range information (4a-4c), as a velocity of a movable body is higher.

9. A simulation program executed by a computer to simulate motion of at least one of movable bodies, the simulation program including:
a plurality of status updating processes to refer to simulation data (8) which includes status data (7) and environmental data (6), the status data (7) representing respective statuses of the movable bodies, the environmental data (6) representing information relating to an environment of paths on which the movable bodies move, and to update the recorded status data (7) by executing a plurality of hierarchized status processes using the recorded simulation data (8) and reference range information (4a-4c), the plurality of hierarchized status update processes being obtained by dividing a process of updating the status data (7) for simulating the motion into a plurality of hierarchies, the reference range information (4a-4c) being preliminarily specified for each of the plurality of hierarchized status update processes and representing a reference range to be referred to the simulation data (8) for executing the plurality of hierarchized status update processes; and
a drive decision process to instruct the plurality of status updating processes to update the status data (7) at an update timing, according to update control information (5) in which a timing of updating the status data (7) for each of the status updating processes is defined; wherein
each of the plurality of status updating processes varies the reference range depending on the timing of updating of each of the plurality of status updating processes in the update control information (5) and a velocity of each of the movable bodies.

10. The simulation program according to claim 9, wherein each status updating process includes widening a range of simulation data indicated in the reference range information (4a-4c), as a velocity of a movable body is higher.

11. A simulation method in which a computer simulates motion of at least one of movable bodies, the simulation method comprising:
a plurality of status updating steps in which the computer refers to simulation data (8) which includes status data (7) and environmental data (6), the status data (7) representing respective statuses of the movable bodies, the environmental data (6) representing information relating to an environment of paths on which the movable bodies move, and updates the recorded status data (7) by executing a plurality of hierarchized status update process using the recorded simulation data (8) and reference range information (4a-4c), the plurality of hierarchized status update processes being obtained by dividing a process of updating the status data (7) for simulating the motion into a plurality of hierarchies, the reference range information (4a-4c) being preliminarily specified for each of the plurality of hierarchized status update processes and representing a reference range to be referred to the simulation data (8) for executing the plurality of hierarchized status update processes; and
a drive decision step in which the computer controls a timing of the plurality of status updating processes to update the status data (7) at an update timing according to update control information (5) in which a timing of updating the status data (7) for each of the status updating processes is defined; wherein
each of the plurality of status updating steps varies the reference range depending on the timing of updating of each of the plurality of status updating steps in the update control information (5) and a velocity of each of the movable bodies.

12. The simulation method according to claim 11, wherein each status updating step includes widening a range of simulation data indicated in the reference range information (4a-4c), as a velocity of a movable body is higher.

## Patentansprüche

1. Simulationsvorrichtung (1), die eine Bewegung von mindestens einem von beweglichen Körpern simuliert, wobei die Simulationsvorrichtung für eine Aufzeichnungseinheit (9) zugänglich ist, die konfiguriert ist, Simulationsdaten (8) aufzuzeichnen, die Statusdaten (7) und Umgebungsdaten (6) enthalten, wobei die Statusdaten (7) jeweilige Status der beweglichen Körper darstellen, wobei die Umgebungsdaten (6) Informationen darstellen, die sich auf eine Umgebung von Wegen beziehen, auf denen sich die beweglichen Körper bewegen, wobei die Simulationsvorrichtung umfasst:
mehrere Statusaktualisierer (3a-3c), die konfiguriert sind, die in der Aufzeichnungseinheit (9) aufgezeichneten Statusdaten (7) zu aktualisieren durch Ausführen mehrerer hierarchiesierter Statusaktualisierungsprozesse, unter Verwendung der in der Aufzeichnungseinheit (9) aufgezeichneten Simulationsdaten (8) und von Referenzbereichsinformationen (4a-4c), wobei die mehreren hierarchiesierten Statusaktualisierungsprozesse erhalten werden durch Aufteilen eines Prozesses des Aktualisierens der Statusdaten (7) zur Simulation der Bewegung in mehrere Hierarchien, wobei die Referenzbereichsinformationen (4a-4c) für jeden der mehreren hierarchiesierten Statusaktualisierungsprozesse vorläufig spezifiziert sind und einen Referenzbereich darstellen, auf den die Simulationsdaten (8) durch jeden der mehreren Statusaktualisierer (3a-3c) zum Ausführen der mehreren hierarchiesierten Statusaktualisierungsprozesse bezogen sein sollen; und
eine Fahrtentscheidungseinheit (2), die konfiguriert ist, die mehreren Statusaktualisierer (3a-3c) anzuweisen, die Statusdaten (7) zu einem Aktualisierungszeitpunkt gemäß Aktualisierungssteuerinformationen (5) zu aktualisieren, in denen ein Zeitpunkt des Aktualisierens der Statusdaten (7) für jeden der Statusaktualisierer definiert ist; wobei
jeder der mehreren Statusaktualisierer (3a-3c) konfiguriert ist, den Referenzbereich in Abhängigkeit von dem Zeitpunkt der Aktualisierung jedes der mehreren Statusaktualisierer (3a-3c) in den Aktualisierungssteuerinformationen (5) und von einer Geschwindigkeit von jedem der beweglichen Körper in zu variieren.

2. Simulationsvorrichtung (1) nach Anspruch 1, wobei
der Zeitpunkt der Aktualisierung, der durch die Aktualisierungssteuerinformationen (5) angegeben wird, gemäß einem Bereich der Simulationsdaten (8) definiert ist, der durch die Referenzbereichsinformationen (4a-4c) angegeben wird.

3. Simulationsvorrichtung (1) nach Anspruch 1 oder 2, wobei
die Aktualisierungssteuerinformationen (5) einen Zyklus enthalten, in dem sich die mehreren Statusaktualisierer (3a-3c) auf die Simulationsdaten (8) beziehen, und
der Zyklus, in dem sich die mehreren Statusaktualisierer (3a-3c) auf die Simulationsdaten (8) beziehen, länger wird, wenn ein Bereich der Simulationsdaten, der durch die Referenzbereichsinformationen (4a-4c) angegeben wird, breiter wird.

4. Simulationsvorrichtung (1) nach einem der Ansprüche 1 bis 3, wobei
die Statusdaten (7) den beweglichen Körpern zugeordnet sind und die Umgebungsdaten (6) in Verbindung mit den Positionsinformationen aufgezeichnet werden, die die Position anzeigen, an der die Umgebung der Wege existiert,
der Bereich der Simulationsdaten (8) durch einen Bereich angegeben wird, der sich auf die Position bezieht, an der die beweglichen Körper existieren, und die mehreren Statusaktualisierer (3a-3c) konfiguriert sind, sich auf die Statusdaten (7) der in dem Bereich existierenden beweglichen Körper und die Umgebungsdaten (6) der Umgebung der in dem Bereich existierenden Wege zu beziehen.

5. Simulationsvorrichtung (1) nach einem der Ansprüche 1 bis 4, wobei
der Zeitpunkt der Aktualisierung, der durch die Aktualisierungssteuerinformationen (5) angegeben wird, durch Zustandsdaten definiert ist, die eine Bedingung zum Starten einer Aktualisierung angeben, und
die Fahrtentscheidungseinheit (2) konfiguriert ist, ein Ereignis zu detektieren, das in einer Simulation verursacht wird, und wenn das detektierte Ereignis eine Bedingung, die in den Zustandsdaten angegeben ist, erfüllt, den Statusaktualisierer anzuweisen, eine Aktualisierung auszuführen.

6. Simulationsvorrichtung (1) nach einem der Ansprüche 1 bis 5, wobei
die beweglichen Körper Fahrzeuge sind, die sich innerhalb eines Raums oder in einer Ebene bewegen, und die mehreren Statusaktualisierer (3a-3c) mindestens enthalten
einen Statusaktualisier einer ersten Hierarchie, der konfiguriert ist, sich auf die Umgebungsdaten (6) zu beziehen, die Informationen einer Wegverbindung in einem ersten Bereich enthalten, einschließlich einer Position eines der Fahrzeuge, und mindestens eine Route von einer aktuellen Position des Fahrzeugs zu einem Ziel zu aktualisieren,
einen Statusaktualisierer einer zweiten Hierarchie, der konfiguriert ist, sich auf die Statusdaten (7) anderer Fahrzeuge in einem zweiten Bereich zu beziehen, einschließlich der Position des einen der Fahrzeuge, und mindestens eine Fahrspur, auf der das Fahrzeug fährt, zu aktualisieren, und
einen Statusaktualisierer einer dritten Hierarchie, der konfiguriert ist, sich auf die Statusdaten (7) anderer Fahrzeuge in einem dritten Bereich zu beziehen, einschließlich der Position des einen der Fahrzeuge, und mindestens die Geschwindigkeit, eine Richtung und eine Position des Fahrzeugs zu aktualisieren, und
der erste Bereich, der zweite Bereich und der dritte Bereich unterschiedliche Größen haben in einer dekrementalen Reihenfolge.

7. Simulationsvorrichtung (1) nach einem der Ansprüche 1 bis 5, wobei
die beweglichen Körper Menschen sind, die sich in einem Raum oder in einer Ebene bewegen, und
die mehreren Statusaktualisierer (3a-3c) mindestens enthalten
einen Statusaktualisierer einer ersten Hierarchie, der konfiguriert ist, sich auf die Umgebungsdaten (6) zu beziehen, die Informationen über eine Wegverbindung in einem ersten Bereich enthalten, und mindestens eine Route von einer aktuellen Position einer Person zu einem Ziel zu aktualisieren,
einen Statusaktualisierer einer zweiten Hierarchie, der konfiguriert ist, sich auf die Statusdaten (7) anderer Personen in einem zweiten Bereich zu beziehen, und mindestens eine Richtung, in die die Person fährt, zu aktualisieren, und
einen Statusaktualisierer einer dritten Hierarchie, der konfiguriert ist, sich auf die Umgebungsdaten (6) in einem dritten Bereich zu beziehen, einschließlich von Informationen über mindestens einen vorhandenen Gegenstand und Ausrüstung, die für eine Einrichtung vorgesehen ist, und ein Bewegungsausmaß der Person zu aktualisieren, und
der erste Bereich, der zweite Bereich und der dritte Bereich unterschiedliche Größen haben in einer dekrementalen Reihenfolge.

8. Simulationsvorrichtung (1) nach einem der Ansprüche 1 bis 7, wobei jeder Statusaktualisierer (3a-3c) konfiguriert ist, einen Bereich von Simulationsdaten, die in den Referenzbereichsinformationen (4a-4c) angegeben sind, zu erweitern, wenn eine Geschwindigkeit eines beweglichen Körpers höher ist.

9. Simulationsprogramm, das von einem Computer ausgeführt wird, um die Bewegung von mindestens einem von beweglichen Körpern zu simulieren, wobei das Simulationsprogramm aufweist:
mehrere Statusaktualisierungsprozesse zur Bezugnahme nehmen auf Simulationsdaten (8), die Statusdaten (7) und Umgebungsdaten (6) enthalten, wobei die Statusdaten (7) jeweilige Status der beweglichen Körper darstellen, wobei die Umgebungsdaten (6) Informationen darstellen, die sich auf eine Umgebung von Wegen beziehen, auf denen sich die beweglichen Körper bewegen, und zum Aktualisieren der aufgezeichneten Statusdaten (7) durch Ausführen von mehreren hierarchisierten Statusprozessen unter Verwendung der aufgezeichneten Simulationsdaten (8) und von Referenzbereichsinformationen (4a-4c), wobei die mehreren hierarchisierten Statusaktualisierungsprozesse erhalten werden durch Aufteilen eines Prozesses des Aktualisierens der Statusdaten (7) zur Simulation der Bewegung in mehrere Hierarchien, wobei die Referenzbereichsinformationen (4a-4c) für jeden der mehreren hierarchisierten Statusaktualisierungsprozesse vorläufig spezifiziert werden und einen Referenzbereich darstellen, auf den die Simulationsdaten (8) durch jeden der mehreren Statusaktualisierer (3a-3c) zum Ausführen der mehreren hierarchiesierten Statusaktualisierungsprozesse bezogen sein sollen; und
einen Fahrtentscheidungsprozess zum Anweisen der mehreren Statusaktualisierungsprozesse, die Statusdaten (7) zu einem Aktualisierungszeitpunkt gemäß zu Aktualisierungssteuerinformationen (5) aktualisieren, in denen ein Zeitpunkt des Aktualisierens der Statusdaten (7) für jeden der Statusaktualisierungsprozesse definiert ist; wobei jeder der mehreren Statusaktualisierungsprozesse den Referenzbereich in Abhängigkeit von dem Zeitpunkt der Aktualisierung jedes der mehreren Statusaktualisierungsprozesse in der Aktualisierungssteuerinformationen (5) und von einer Geschwindigkeit von jedem der beweglichen Körper variiert.

10. Simulationsprogramm nach Anspruch 9, wobei jeder Statusaktualisierungsprozess Erweitern eines in den Referenzbereichsinformationen (4a-4c) angegeben Bereichs von Simulationsdaten, wenn eine Geschwindigkeit eines beweglichen Körpers höher ist, enthält.

11. Simulationsverfahren, bei dem ein Computer eine Bewegung von mindestens einem von beweglichen Körpern simuliert, wobei das Simulationsverfahren umfasst:
mehrere Statusaktualisierungsschritte, in denen der Computer auf Simulationsdaten (8) Bezug nimmt, die Statusdaten (7) und Umgebungsdaten (6) enthalten, wobei die Statusdaten (7) jeweilige Status der beweglichen Körper darstellen, die Umgebungsdaten (6) Informationen bezüglich einer Umgebung von Wegen, auf denen sich die beweglichen Körper bewegen, darstellen, und die aufgezeichneten Statusdaten (7) durch Ausführen von mehreren hierarchisierten Statusaktualisierungsprozessen unter Verwendung der aufgezeichneten Simulationsdaten (8) und von Referenzbereichsinformationen (4a-4c) aktualisiert, wobei die mehreren hierarchisierten Statusaktualisierungsprozesse erhalten werden durch Aufteilen eines Prozesses des Aktualisierens der Statusdaten (7) zur Simulation der Bewegung in mehrere Hierarchien, wobei die Referenzbereichsinformationen (4a-4c) für jeden der mehreren hierarchisierten Statusaktualisierungsprozesse vorläufig spezifiziert werden und einen Referenzbereich darstellen, auf den die Simulationsdaten (8) durch jeden der mehreren Statusaktualisierer (3a-3c) zum Ausführen der mehreren hierarchiesierten Statusaktualisierungsprozesse bezogen sein sollen; und
einen Fahrtentscheidungsschritt, in dem der Computer ein Zeitpunkt der mehreren Statusaktualisierungsprozesse steuert, um die Statusdaten (7) zu einem Aktualisierungszeitpunkt gemäß Aktualisierungssteuerinformationen (5) zu aktualisieren, in denen ein Zeitpunkt des Aktualisierens der Statusdaten (7) für jeden der Statusaktualisierungsprozesse definiert ist; wobei
jeder der mehreren Statusaktualisierungsschritte den Referenzbereich in Abhängigkeit von dem Zeitpunkt der Aktualisierung jedes der mehreren Statusaktualisierungsschritte in den Aktualisierungssteuerinformationen (5) und von einer Geschwindigkeit von jedem der beweglichen Körper variiert.

12. Simulationsverfahren nach Anspruch 11, wobei jeder Statusaktualisierungsschritt Erweitern eines in den Referenzbereichsinformationen (4a-4c) angegeben Bereichs von Simulationsdaten, wenn eine Geschwindigkeit eines beweglichen Körpers höher ist, enthält.

## Revendications

1. Dispositif de simulation (1) qui simule un déplacement d'au moins l'un parmi des corps mobiles, le dispositif de simulation étant accessible à une unité d'enregistrement (9) qui est configurée de manière à enregistrer des données de simulation (8) qui incluent des données d'état (7) et des données environnementales (6), les données d'état (7) représentant des états respectifs des corps mobiles, les données environnementales (6) représentant des informations connexes à un environnement de chemins sur lesquels les corps mobiles se déplacent, le dispositif de simulation comprenant :
une pluralité de modules de mise à jour d'état (3a-3c) lesquels sont configurés de manière à mettre à jour les données d'état (7) enregistrées dans l'unité d'enregistrement (9), en exécutant une pluralité de processus de mise à jour d'état hiérarchisés en utilisant les données de simulation (8) enregistrées dans l'unité d'enregistrement (9) et des informations de plage de référence (4a-4c), la pluralité de processus de mise à jour d'état hiérarchisés étant obtenue en divisant un processus de mise à jour des données d'état (7) pour simuler le déplacement dans une pluralité de hiérarchies, les informations de plage de référence (4a-4c) étant spécifiées de manière préliminaire pour chaque processus de la pluralité de processus de mise à jour d'état hiérarchisés et représentant une plage de référence à référer aux données de simulation (8) par chaque module de la pluralité de modules de mise à jour d'état (3a-3c) pour exécuter la pluralité de processus de mise à jour d'état hiérarchisés ; et
une unité de décision de conduite (2) configurée de manière à donner instruction, à la pluralité de modules de mise à jour d'état (3a-3c), de mettre à jour les données d'état (7), à une temporisation de mise à jour, selon des informations de commande de mise à jour (5) dans lesquelles est définie une temporisation de mise à jour des données d'état (7) pour chacun des modules de mise à jour d'état ; dans lequel
chaque module de la pluralité de modules de mise à jour d'état (3a-3c) est configuré de manière à faire varier la plage de référence en fonction de la temporisation de mise à jour de chaque module de la pluralité de modules de mise à jour d'état (3a-3c) dans les informations de commande de mise à jour (5) et d'une vitesse de chacun des corps mobiles.

2. Dispositif de simulation (1) selon la revendication 1, dans lequel :
la temporisation d'une mise à jour indiquée par les informations de commande de mise à jour (5) est définie selon une plage des données de simulation (8) indiquée par les informations de plage de référence (4a-4c).

3. Dispositif de simulation (1) selon la revendication 1 ou 2, dans lequel :
les informations de commande de mise à jour (5) incluent un cycle dans lequel la pluralité de modules de mise à jour d'état (3a-3c) fait référence aux données de simulation (8) ; et
le cycle dans lequel la pluralité de modules de mise à jour d'état (3a-3c) fait référence aux données de simulation (8) s' étend à mesure qu'une plage des données de simulation indiquée par les informations de plage de référence (4a-4c) s'étend.

4. Dispositif de simulation (1) selon l'une quelconque des revendications 1 à 3, dans lequel :
les données d'état (7) sont associées aux corps mobiles, et les données environnementales (6) sont enregistrées en association avec les informations de position indiquant la position à laquelle existe l'environnement des chemins ;
la plage des données de simulation (8) est indiquée par une zone en référence à la position à laquelle les corps mobiles existent ; et
la pluralité de modules de mise à jour d'état (3a-3c) est configurée de manière à faire référence aux données d'état (7) des corps mobiles existant dans la zone et aux données environnementales (6) de l'environnement des chemins existant dans la zone.

5. Dispositif de simulation (1) selon l'une quelconque des revendications 1 à 4, dans lequel :
la temporisation de mise à jour indiquée par les informations de commande de mise à jour (5) est définie par des données de condition qui indiquent une condition de démarrage d'une mise à jour ; et
l'unité de décision de conduite (2) est configurée de manière à détecter un événement occasionné dans une simulation, et lorsque l'événement détecté satisfait une condition indiquée dans les données de condition, à donner instruction au module de mise à jour d'état d'exécuter une mise à jour.

6. Dispositif de simulation (1) selon l'une quelconque des revendications 1 à 5, dans lequel :
les corps mobiles sont des véhicules se déplaçant dans un espace ou sur un plan ; et
la pluralité de modules de mise à jour d'état (3a-3c) inclut au moins :
un module de mise à jour d'état de première hiérarchie configuré de manière à se référer aux données environnementales (6), lesquels incluent des informations d'une connexion de chemin dans une première zone, incluant une position de l'un des véhicules, et à mettre à jour au moins un itinéraire d'une position en cours du véhicule à une destination ;
un module de mise à jour d'état de deuxième hiérarchie configuré de manière à se référer aux données d'état (7) d'autres véhicules dans une deuxième zone, inclut la position de l'un des véhicules, et à mettre à jour au moins une voie dans laquelle le véhicule se déplace ; et
un module de mise à jour d'état de troisième hiérarchie configuré de manière à se référer aux données d'état (7) d'autres véhicules dans une troisième zone, incluant la position de l'un des véhicules, et à mettre à jour au moins la vitesse, une direction et une position du véhicule ; et
la première zone, la deuxième zone et la troisième zone présentent des tailles différentes dans un ordre décroissant.

7. Dispositif de simulation (1) selon l'une quelconque des revendications 1 à 5, dans lequel :
les corps mobiles sont des personnes se déplaçant dans un espace ou sur un plan ; et
la pluralité de modules de mise à jour d'état (3a-3c) inclut au moins :
un module de mise à jour d'état de première hiérarchie configuré de manière à se référer aux données environnementales (6), lesquelles incluent des informations d'une connexion de chemin dans une première zone, et à mettre à jour au moins un itinéraire d'une position en cours d'une personne à une destination ;
un module de mise à jour d'état de deuxième hiérarchie configuré de manière à se référer aux données d'état (7) d'autres personnes dans une deuxième zone, et à mettre à jour au moins une direction dans laquelle la personne se déplace ; et
un module de mise à jour d'état de troisième hiérarchie configuré de manière à se référer aux données environnementales (6) dans une troisième zone, incluant des informations sur au moins l'un parmi des éléments et des équipements présents fournis pour une installation, et à mettre à jour une quantité de déplacement de la personne ; et
la première zone, la deuxième zone et la troisième zone présentent des tailles différentes dans un ordre décroissant.

8. Dispositif de simulation (1) selon l'une quelconque des revendications 1 à 7, dans lequel chaque module de mise à jour d'état (3a-3c) est configuré de manière à élargir une plage de données de simulation indiquée dans les informations de plage de référence (4a-4c), étant donné qu'une vitesse d'un corps mobile est supérieure.

9. Programme de simulation, exécuté par un ordinateur, pour simuler le déplacement d'au moins l'un parmi des corps mobiles, le programme de simulation incluant :
une pluralité de processus de mise à jour d'état pour faire référence à des données de simulation (8) qui incluent des données d'état (7) et des données environnementales (6), les données d'état (7) représentant des états respectifs des corps mobiles, les données environnementales (6) représentant des informations connexes à un environnement de chemins sur lesquels les corps mobiles se déplacent, et pour mettre à jour les données d'état enregistrées (7) en exécutant une pluralité de processus de mise à jour d'état hiérarchisés, en utilisant les données de simulation enregistrées (8) et des informations de plage de référence (4a-4c), la pluralité de processus de mise à jour d'état hiérarchisés étant obtenue en divisant un processus de mise à jour des données d'état (7) pour simuler le déplacement en une pluralité de hiérarchies, les informations de plage de référence (4a-4c) étant préalablement spécifiées pour chaque processus de la pluralité de processus de mise à jour d'état hiérarchisés et représentant une plage de référence à référer aux données de simulation (8) pour exécuter la pluralité de processus de mise à jour d'état hiérarchisés ; et
un processus de décision de conduite pour donner instruction, à la pluralité de processus de mise à jour d'état, de mettre à jour les données d'état (7) à une temporisation de mise à jour, selon des informations de commande de mise à jour (5) dans lesquelles est définie une temporisation de mise à jour des données d'état (7) pour chacun des processus de mise à jour d'état ; dans lequel
chaque processus de la pluralité de processus de mise à jour d'état fait varier la plage de référence en fonction de la temporisation de mise à jour de chaque processus de la pluralité de processus de mise à jour d'état dans les informations de commande de mise à jour (5) et d'une vitesse de chacun des corps mobiles.

10. Programme de simulation selon la revendication 9, dans lequel chaque processus de mise à jour d'état inclut l'élargissement d'une plage de données de simulation indiquée dans les informations de plage de référence (4a-4c), étant donné qu'une vitesse d'un corps mobile est supérieure.

11. Procédé de simulation dans lequel un ordinateur simule un déplacement d'au moins l'un parmi des corps mobiles, le procédé de simulation comprenant :
une pluralité d'étapes de mise à jour d'état dans lesquelles l'ordinateur se réfère à des données de simulation (8) qui incluent des données d'état (7) et des données environnementales (6), les données d'état (7) représentant des états respectifs des corps mobiles, les données environnementales (6) représentant des informations connexes à un environnement de chemins sur lesquels se déplacent les corps mobiles, et met à jour les données d'état enregistrées (7) en exécutant une pluralité de processus de mise à jour d'état hiérarchisés, en utilisant les données de simulation enregistrées (8) et des informations de plage de référence (4a-4c), la pluralité de processus de mise à jour d'état hiérarchisés étant obtenue en divisant un processus de mise à jour des données d'état (7) pour simuler le déplacement, en une pluralité de hiérarchies, les informations de plage de référence (4a-4c) étant spécifiées de manière préliminaire pour chaque processus de la pluralité de processus de mise à jour d'état hiérarchisés et représentant une plage de référence à référer aux données de simulation (8) pour exécuter la pluralité de processus de mise à jour d'état hiérarchisés ; et
une étape de décision de conduite dans laquelle l'ordinateur commande une temporisation de la pluralité de processus de mise à jour d'état pour mettre à jour les données d'état (7) à une temporisation de mise à jour, selon des informations de commande de mise à jour (5) dans lesquelles est définie une temporisation de mise à jour des données d'état (7) pour chacun des processus de mise à jour d'état ; dans lequel
chaque étape de la pluralité d'étapes de mise à jour d'état fait varier la plage de référence en fonction de la temporisation de mise à jour de chaque étape de la pluralité d'étapes de mise à jour d'état dans les informations de commande de mise à jour (5), et d'une vitesse de chacun des corps mobiles.

12. Procédé de simulation selon la revendication 11, dans lequel chaque étape de mise à jour d'état inclut l'élargissement d'une plage de données de simulation indiquée dans les informations de plage de référence (4a-4c), étant donné que la vitesse d'un corps mobile est supérieure.
